# EUROPÄISCHE PATENTSCHRIFT

(11) **EP 4 209 649 B1**
(45) Veröffentlichungstag und Bekanntmachung des Hinweises auf die Patenterteilung: **09.09.2026**
(21) Anmeldenummer: 22217251.2
(22) Anmeldetag: 30.12.2022
(51) Int. Cl.: E05B 81/76, E05B 85/10, E05B 81/50

(54) **ZIERELEMENT MIT EINEM BETÄTIGUNGSMODUL, FAHRZEUGELEMENT UND FAHRZEUG**
DECORATIVE ELEMENT WITH AN ACTUATING MODULE, VEHICLE ELEMENT AND VEHICLE
ÉLÉMENT DÉCORATIF COMPRENANT UN MODULE D'ACTIONNEMENT, ÉLÉMENT DE VÉHICULE ET VÉHICULE

(30) Priorität: 30.12.2021 DE 102021215096; 22.03.2022 DE 102022202809
(43) Veröffentlichungstag der Anmeldung: 12.07.2023
(73) Patentinhaber: Witte Automotive GmbH, 42551 Velbert (DE)
(72) Erfinder: Mensch, Reinaldo, 42113 Wuppertal (DE); Höhn, Ralf, 42549 Velbert (DE)
(74) Vertreter: Liedtke & Partner Patentanwälte

(56) Entgegenhaltungen:
- WO-A1-2021/043666
- FR-A1- 3 081 487
- US-A1- 2014 367 975
- US-A1- 2019 152 433

## Beschreibung

Die Erfindung betrifft ein Zierelement, insbesondere ein Emblem, mit einem Betätigungsmodul für ein bewegliches Fahrzeugelement, insbesondere für eine Schiebetür, eine Heckklappe oder eine Motorhaube/Fronthaube, eines Fahrzeugs. Des Weiteren betrifft die Erfindung ein bewegliches Fahrzeugelement mit einem solchen Zierelement und ein Fahrzeug mit mindestens einem solchen beweglichen Fahrzeugelement.

Betätigungsmodule in Form von Griffmodulen sind beispielsweise bekannt an Fahrzeugtüren, Heckklappen oder Motorhauben. Diese sind üblicherweise mit einem Griffelement versehen, das nach außen geschwenkt werden kann, um die Fahrzeugtür, die Heckklappe oder die Motorhaube öffnen zu können. Griffmodule können dabei elektronische Sensormodule zum Öffnen eines Schlosses der Tür umfassen. Aus der DE 10 2018 128 539 A1 ist ein System aus mehreren kapazitiven Sensoren eines Berührungs- oder Gestenpads in Kombination mit einem mechanischen Schalter zur Bereitstellung eines Zugangs zu einem Fahrzeug bekannt. Aus der DE 102 18 915 A1 ist ein Firmenemblem als manuelle Handhabe mit einem Druckstift bekannt. Weitere Betätigungsmodule sind beispielsweise aus der WO2021/043666 A1 und der FR 3 081 487 A1 bekannt.

Der Erfindung liegt die Aufgabe zu Grunde, ein Zierelement mit einem Betätigungsmodul anzugeben, welches kompakt aufgebaut ist und eine intuitive Betätigung ermöglicht. Des Weiteren ist ein bewegliches Fahrzeugelement mit einem solchen Zierelement sowie ein Fahrzeug mit einem solchen beweglichen Fahrzeugelement anzugeben.

Die Aufgabe wird hinsichtlich des Zierelements mit einem Betätigungsmodul erfindungsgemäß mit den im Patentanspruch 1 angegebenen Merkmalen gelöst. Hinsichtlich des beweglichen Fahrzeugelements wird die Aufgabe erfindungsgemäß mit den im Patentanspruch 10 angegebenen Merkmalen gelöst. Hinsichtlich des Fahrzeugs wird die Aufgabe erfindungsgemäß mit den im Patentanspruch 11 angegebenen Merkmalen gelöst.

Das erfindungsgemäße Zierelement, insbesondere an einem beweglichen Fahrzeugelement, wie einer Heckklappe oder einer Motorhaube, umfasst ein Betätigungsmodul für ein elektronisches Schließsystem des Fahrzeugelements oder eines Fahrzeugs, wobei das Betätigungsmodul zumindest ein, insbesondere durch eine Betätigung, zum Beispiel eine Druckausübung verformbares, Betätigungselement und einen Betätigungssensor zum Ausführen einer Schaltfunktion, zum Beispiel ein Auslösen, insbesondere ein Öffnen oder Entriegeln, eines elektronischen Schlosses, umfasst, wobei das Zierelement das Betätigungselement bildet und sich das Zierelement beim Betätigen, insbesondere in seine Betätigungsstellung, elastisch verformt. Unter einer elastischen Verformung wird insbesondere eine reversible Verformung verstanden.

Die Betätigung durch Druckausübung ermöglicht eine Betätigung auch bei kalten Temperaturen und Eis im Bereich des als Zierelement ausgebildeten Betätigungselements. Zudem kann eine separate Notöffnung entfallen.

Das Betätigungselement ist als ein äußeres Betätigungselement ausgebildet, das von außen für einen Nutzer zugänglich ist. Das als Betätigungselement ausgebildete Zierelement selbst kann als ein verformbares Element ausgebildet sein, welches sich beim Betätigen des Zierelements, insbesondere in seine Betätigungsstellung, reversibel verformt.

Der Betätigungssensor ist als ein innenliegender Betätigungssensor ausgebildet. Unter einem innenliegenden Betätigungssensor wird insbesondere ein vollständig integrierter, insbesondere ein nach außen vollständig gehäuster oder gekapselter, Sensor verstanden. Dies führt zu einer einfachen und sicheren mechanischen Betätigung. Zudem ist die Betätigung weniger störanfällig. Des Weiteren ist eine Elektronik des Betätigungsmoduls, wie der Betätigungssensor und die Auswerteeinheit, gegenüber Umwelteinflüssen, wie Regen, Schnee, Staub, geschützt, so dass wiederum Fehlauslösungen vermieden werden können.

Das Betätigungselement und/oder der Betätigungssensor können jeweils großflächig ausgebildet sein. Insbesondere weist das Betätigungselement eine größere Betätigungsfläche als eine Sensorfläche des Betätigungssensors auf. Ein solch großflächiger Betätigungsbereich ermöglicht eine intuitive und verbesserte Betätigung und bedarf keiner Feinmotorik beim Nutzer.

Das äußere Betätigungselement ist insbesondere mit dem Betätigungssensor wirkverbunden, um die elastische Verformung des äußeren Betätigungselements in einen Betätigungshub (auch Schaltbewegung oder Schalthub genannt) des Betätigungssensors zu übertragen. Der Betätigungssensor generiert in Folge des ausgeübten Betätigungshubes bei Erreichen oder Überschreiten eines vorgegebenen Mindestbetätigungshubes ein Auslösesignal oder Schaltsignal, um ein Auslösen, insbesondere Öffnen oder Entriegeln, eines Schlosses zu ermöglichen.

Die mit der Erfindung erzielten Vorteile bestehen insbesondere darin, dass ein solches Zierelement, welches als ein integriertes Betätigungsmodul ausgebildet ist, eine intuitive Öffnung des beweglichen Fahrzeugelements, wie einer Klappe oder eines Deckels, ermöglicht. Durch Drücken auf das Zierelement, zum Beispiel ein Emblem am beweglichen Fahrzeugelement, wird mittels des Betätigungssensors ein Öffnungswunsch erkannt und als Schaltfunktion beispielsweise ein elektronisches Schließsystem geöffnet. Dabei kann das Zierelement aufgrund der Ausbildung als Betätigungselement an beliebiger Stelle gedrückt werden, um eine Betätigung auszuführen und ein Steuersignal, wie zum Beispiel ein Öffnungssignal oder Schließsignal, auszulösen. Das Steuersignal wird über eine Wirkverbindung von Betätigungselement und Betätigungssensor durch den Betätigungssensor generiert. Hierdurch ist eine intuitive Betätigung und Bedienung ermöglicht. Dabei ist das Zierelement derart flexibel, insbesondere elastisch verformbar ausgebildet, dass minimale Betätigungswege von einigen Zehntelmillimeter, insbesondere von 0,01 mm oder größer, insbesondere in einem Bereich von 0,01 mm bis 0,7 mm, insbesondere von 0,01 mm bis 0,5 mm oder 0,01 mm bis 0,2 mm, mittels des Betätigungssensors erfassbar sind.

Das Zierelement kann zum Beispiel ein flexibles, insbesondere elastisches, Material, insbesondere ein Schaumstoff, ein Silikon, ein thermoplastisches Elastomer und/oder ein thermoplastisches Polyurethan aufweisen.

Erfindungsgemäß ist zumindest zwischen dem Zierelement und zumindest einer Komponente des Betätigungssensors ein flexibles Element angeordnet, welches sich beim Betätigen des Zierelements, insbesondere in seine Betätigungsstellung, verformt. Dazu weist das flexible Element als zumindest einen Werkstoff ein Schaummaterial, ein Silikon, ein thermoplastisches Elastomer und/oder ein thermoplastisches Polyurethan auf. Mittels des flexiblen Elements ist ein intuitives Betätigen, insbesondere Öffnen, des elektronischen Schließsystems möglich. Mittels des flexiblen Elements zwischen Zierelement als Betätigungselement und Betätigungssensor sind minimale Betätigungswege von einigen Zehntelmillimeter, insbesondere von 0,01 mm oder größer, insbesondere in einem Bereich von 0,01 mm bis 0,7 mm, insbesondere von 0,01 mm bis 0,5 mm oder 0,01 mm bis 0,2 mm, möglich und als Betätigungshub vom Betätigungssensor erfassbar.

In einer möglichen Ausführung ist das flexible Element zwischen dem Betätigungselement und dem Betätigungssensor angeordnet. Mittels einer derartigen Anordnung des flexiblen Elements ist eine Betätigung des Betätigungselements durch den Betätigungssensor erfassbar. Insbesondere ist mittels zwischen Betätigungselement und Betätigungssensor angeordnetem flexiblen Elementes ein minimaler Betätigungsweg des Betätigungselements erfassbar.

In einer weiteren Ausführung ist das flexible Element in einem Befestigungselement oder zwischen dem Betätigungselement und dem Befestigungselement angeordnet. Dadurch ist eine Betätigung des Betätigungselements, beispielsweise um das Schließsystem zu öffnen, optimiert erfassbar.

In einer Ausführung ist das flexible Element in dem Befestigungselement, beispielsweise in einem abstehenden Befestigungsfuß, angeordnet. Mittels des flexiblen Elements ist das jeweilige Befestigungselement beweglich, insbesondere elastisch beweglich oder federnd, an einer Fahrzeugaußenhaut des Fahrzeugelements gelagert. Insbesondere umfasst das Zierelement einen Hauptkörper, von welchem das Befestigungselement in Richtung der Fahrzeugaußenhaut abragt. Dabei kann das jeweilige Befestigungselement beispielsweise als ein Fußelement mit Innengewinde, in welches eine Schraube eingeführt werden kann, ausgebildet sein.

Der Betätigungssensor ist in einer Ausbildung des Zierelements als kraftgesteuerter kapazitiver Betätigungssensor ausgebildet. Insbesondere ist der Betätigungssensor als ein sogenanntes MOC-Modul ausgebildet (= metall-over-cap-Modul), bei welchem innen liegende metallische Sensorkomponenten, insbesondere die Elektroden, des, insbesondere kapazitiven, Betätigungssensors nach außen hin gekapselt sind. Dabei ist der Betätigungssensor zum Ausführen einer Schaltfunktion, zum Beispiel zum Entriegeln und Öffnen des elektronischen Schließsystems, ausgebildet.

In einer Weiterbildung weist der Betätigungssensor eine Anzahl von Sensorelementen auf, mittels welcher ein minimaler Betätigungsweg oder Auslöseweg von 0,01 mm oder größer, maximal von 0,6 mm, des Betätigungselements als Betätigungshub des Betätigungssensors ermittelbar ist, um beispielsweise das Schließsystem des Fahrzeugs zu betätigen.

Insbesondere weist der Betätigungssensor die zumindest zwei Sensorelemente auf, welche zueinander beabstandet und einander gegenüberliegend angeordnet sind. Die Sensorelemente sind nach außen gekapselt, beispielsweise mittels des Zierelements nach außen gekapselt. Die beiden Sensorelemente sind dabei derart ausgebildet, dass zwischen ihnen das elektrische Feld aufgespannt wird, welches einer Auswertung des Betätigungshubs dient. In Abhängigkeit einer Ausbildung des Betätigungssensors kann ein erstes Sensorelement mit einer Leiterplatte eine Messelektrode bilden und ein zweites Sensorelement bildet eine Gegenelektrode oder umgekehrt.

Erfindungsgemäß umfasst das jeweilige Sensorelement ein zugehöriges Sensorgehäuseteil und die beiden Sensorelemente sind mittels der Sensorgehäuseteile relativ zueinander beweglich gelagert. Die Sensorgehäuseteile dienen also insbesondere der beweglichen Lagerung der Sensorelemente.

Zwischen den beiden Sensorgehäuseteilen ist erfindungsgemäß ein weiteres flexibles Element angeordnet. Das weitere flexible Element kann zum Beispiel ein flexibles, insbesondere elastisches, Material, insbesondere einen Schaumstoff, ein Silikon, ein thermoplastisches Elastomer und/oder ein thermoplastisches Polyurethan aufweisen. Alle weiteren flexiblen Elemente zwischen den beiden Sensorgehäuseteilen weisen die gleiche Form, Größe, Abmessung und/oder das gleiche Material auf. Insbesondere wird mittels des weiteren flexiblen Elements ein Betätigungshub, von insbesondere einigen Zehntelmillimeter, bereitgestellt, wobei das weitere flexible Element zwischen den Sensorgehäuseteilen gleichzeitig eine Verbindungsfunktion, Rückstellfunktion und Abdichtungsfunktion ausüben kann.

Die Erfindung betrifft weiterhin ein bewegliches Fahrzeugelement, beispielsweise eine Motorhaube oder Heckklappe, mit einem Zierelement, welches ein Betätigungsmodul für ein elektronisches Schließsystem des Fahrzeugelements oder eines Fahrzeugs umfasst. Das Betätigungsmodul umfasst zumindest ein Betätigungselement und einen Betätigungssensor zum Ausführen einer Schaltfunktion, wobei das Zierelement das Betätigungselement bildet und wobei zumindest zwischen dem Zierelement und dem Betätigungssensor ein flexibles Element angeordnet ist, das sich beim Betätigen des Zierelements, insbesondere in seine Betätigungsstellung, verformt. Dabei können das Betätigungselement und der Betätigungssensor gemeinsam auf einer Seite des beweglichen Fahrzeugelements oder getrennt auf gegenüberliegenden Seiten des beweglichen Fahrzeugelements angeordnet sein.

Das Zierelement, welches an oder teilweise in dem beweglichen Fahrzeugelement angeordnet ist, ist als ein integriertes Betätigungsmodul ausgebildet und ermöglicht eine intuitive Öffnung des beweglichen Fahrzeugelements, wie einer Klappe oder eines Deckels. Durch Drücken auf das Zierelement, zum Beispiel ein Emblem an dem beweglichen Fahrzeugelement, wird mittels des Betätigungssensors ein Öffnungswunsch erkannt und als Schaltfunktion beispielsweise ein elektronisches Schließsystem geöffnet. Dadurch ist es möglich, das bewegliche Fahrzeugelement, zum Beispiel die Heckklappe oder eine Motorhaube/Fronthaube eines Fahrzeugs, zu öffnen.

Darüber hinaus betrifft die Erfindung ein Fahrzeug mit mindestens einem solchen Fahrzeugelement, welches ein Zierelement mit einem Betätigungsmodul für ein elektronisches Schließsystem aufweist. Dabei kann das Zierelement beispielsweise ein Emblem sein.

Ausführungsbeispiele der Erfindung werden anhand von Zeichnungen näher erläutert. Dabei zeigen:
- Figur 1: in perspektivischer Darstellung ein Fahrzeug mit einem außenseitig angeordneten Zierelement mit integriertem Betätigungsmodul,
- Figur 2: eine schematische Darstellung eines Vorbilds eines Zierelements mit integriertem Betätigungsmodul, und
- Figur 3: eine schematische Darstellung eines erfindungsgemäßen Ausführungsbeispiels eines Zierelements mit integriertem Betätigungsmodul.

Einander entsprechende Teile sind in allen Figuren mit den gleichen Bezugszeichen versehen.

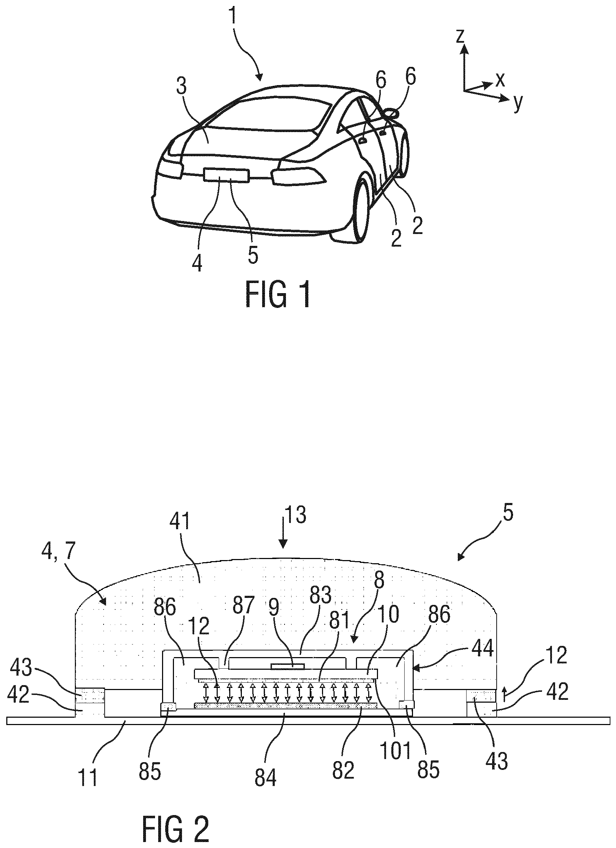

**Figur 1** zeigt schematisch ein Fahrzeug 1. Das Fahrzeug 1 weist auf seiner Außenseite mehrere elektronisch schaltbare Bereiche auf. Beispielsweise weist das Fahrzeug 1 im Bereich einer Tür 2 oder einer Heckklappe 3 ein Zierelement 4, insbesondere ein Emblem, auf. In dem Zierelement 4 ist ein Betätigungsmodul 5 für ein elektronisches Schließsystem, insbesondere zum Entriegeln, Verriegeln, Öffnen und/oder Schließen des elektronischen Schließsystems, insbesondere eines elektronischen Schlosses, der Tür 2 oder der Heckklappe 3, integriert. Insbesondere dient das Betätigungsmodul 5 dem Erfassen mindestens einer manuellen Betätigung durch eine Hand eines Nutzers.

Das Betätigungsmodul 5 ist in dem Zierelement 4 der Tür 2 oder der Heckklappe 3, insbesondere auf oder an der Innenseite des Zierelements 4, angeordnet.

Das Betätigungsmodul 5 ermöglicht in einfacher Art und Weise das Aktivieren einer entsprechenden Funktion des Fahrzeugs 1, wie beispielsweise Öffnen oder Schließen der Tür 2, Entriegeln oder Verriegeln eines Heckklappenschlosses oder Frontklappenschlosses oder Öffnen oder Schließen der Heckklappe 3. Hierzu kann das Fahrzeug 1 mit mehreren Betätigungsmodulen 5 ausgestattet sein. Dabei kann das Betätigungsmodul 5 sowohl in dem oder den Zierelement/en 4, wie zum Beispiel in einem am Fahrzeug 1 angeordneten Emblem, als auch in einem Griff 6 angeordnet sein.

**Figur 2** zeigt eine schematische Darstellung eines Vorbilds eines Zierelements 4 mit integriertem Betätigungsmodul 5.

Das Betätigungsmodul 5 umfasst zumindest ein Betätigungselement 7 und einen, insbesondere kapazitiven, Betätigungssensor 8, insbesondere einen kraftgesteuerten kapazitiven Betätigungssensor 8, zum Ausführen einer Schaltfunktion, zum Beispiel zum Entriegeln und Öffnen des elektronischen Schließsystems.

Das Betätigungselement 7 ist beispielsweise als ein durch eine Betätigung, zum Beispiel eine Druckausübung, verformbares Element ausgebildet, das das Zierelement 4 bildet, zum Beispiel ein Emblem. Das Zierelement 4 verformt sich beim Betätigen, insbesondere in seine Betätigungsstellung, elastisch. Unter einer elastischen Verformung wird insbesondere eine reversible Verformung verstanden.

Das Betätigungselement 7 ist als ein äußeres Betätigungselement ausgebildet, das von außen für einen Nutzer zugänglich ist. Das als Betätigungselement 7 ausgebildete Zierelement 4 selbst kann somit als ein verformbares Element ausgebildet sein, welches sich beim Betätigen des Zierelements 4, insbesondere in seine Betätigungsstellung, reversibel verformt.

Der Betätigungssensor 8 ist insbesondere als ein innenliegender Betätigungssensor 8 ausgebildet. Unter einem innenliegenden Betätigungssensor 8 wird insbesondere ein vollständig integrierter, insbesondere ein nach außen vollständig gehäuster oder gekapselter, Sensor verstanden.

Das Betätigungselement 7 und/oder der Betätigungssensor 8 können jeweils als großflächige Elemente, insbesondere streifenförmig, plattenförmig, scheibenförmig, kreisförmig oder dergleichen, ausgebildet sein. Insbesondere weist das Betätigungselement 7 eine größere äußere Betätigungsfläche als eine innere Sensorfläche des Betätigungssensors 8 auf.

Das äußere, als äußeres Zierelement 4 ausgebildete, Betätigungselement 7 ist insbesondere mit dem Betätigungssensor 8 wirkverbunden, um die elastische Verformung des äußeren Betätigungselements 7 in einen Betätigungshub 12 (auch Schaltbewegung oder Schalthub genannt) des Betätigungssensors 8 zu übertragen. Der Betätigungssensor 8 generiert in Folge des ausgeübten Betätigungshubes 12 bei Erreichen oder Überschreiten eines vorgegebenen Mindestbetätigungshubes ein Auslösesignal oder Schaltsignal, um ein Auslösen, insbesondere Öffnen oder Entriegeln, eines Schlosses zu ermöglichen.

Das Betätigungsmodul 5 umfasst darüber hinaus eine elektronische Auswerteeinheit 9 (auch Elektronikeinheit genannt).

Die elektronische Auswerteeinheit 9 ist mit dem kapazitiven Betätigungssensor 8 zumindest signaltechnisch verbunden. Dabei ist mittels der elektronischen Auswerteeinheit 9 anhand einer erfassten Kapazitätsveränderung des kapazitiven Betätigungssensors 8 ein Betätigungsweg des Betätigungselements 7, insbesondere ein durch Druck der Hand des Nutzers auf das Betätigungsmodul 5 zurückgelegter Betätigungsweg, ermittelbar. Der Betätigungsweg des Betätigungselements 7 stellt dabei aufgrund der Wirkverbundenheit von Betätigungselement 7 und Betätigungssensor 8 den Betätigungshub 12 dar, der mittels des Betätigungssensors 8 erfassbar ist.

Der kapazitive Betätigungssensor 8 und die elektronische Auswerteeinheit 9 sind derart eingerichtet, dass bei einem ermittelten Betätigungsweg von kleiner 0,8 mm, insbesondere in einem Bereich von 0,01 mm bis 0,6 mm, zum Beispiel von 0,01 mm bis 0,4 mm, ein Auslösesignal zum Ausführen einer Funktion des Fahrzeugs 1, insbesondere einer Schaltfunktion des elektronischen Schließsystems, zum Beispiel ein Auslösesignal zum Entriegeln und Öffnen des elektronischen Schließsystems, generiert wird. Insbesondere erfasst der kapazitive Betätigungssensor 8 den aus der elastischen Verformung oder der Betätigungsbewegung des äußeren Betätigungselements 7 resultierenden Betätigungshub 12 (auch Schaltbewegung oder Schalthub genannt) und kann diesen der elektronischen Auswerteeinheit 9 zuführen. Der Betätigungssensor 8 und/oder die Auswerteeinheit 9 generieren beziehungsweise generiert in Folge des ausgeübten Betätigungshubes 12 bei Erreichen oder Überschreiten eines vorgegebenen Mindestbetätigungshubes ein Auslösesignal oder Schaltsignal für ein Schloss zum Beispiel der Tür 2 und/oder der Heckklappe 3, um zum Beispiel ein Auslösen, insbesondere Öffnen oder Entriegeln, des Schlosses zu ermöglichen.

Insbesondere sind der kapazitive Betätigungssensor 8 und die elektronische Auswerteeinheit 9 derart eingerichtet, dass ein minimaler Betätigungsweg oder Auslöseweg von 0,01 mm oder größer, insbesondere in einem Bereich von 0,01 mm bis 0,8 mm, insbesondere von 0,01 mm bis 0,6 mm oder 0,01 mm bis 0,4 mm, erfassbar ist.

Beispielsweise werden die Messwerte für die Kapazitätsveränderung mit einer solchen Auflösung erfasst und mittels der elektronischen Auswerteeinheit 9 verarbeitet, dass ein minimaler Betätigungsweg oder Auslöseweg von 0,01 mm oder größer, maximal von 0,6 mm, ermittelbar ist.

Hierzu umfasst die elektronische Auswerteeinheit 9 einen Analog-Digital-Wandler und einen Mikroprozessor. Die elektronische Auswerteeinheit 9 ist Teil einer Leiterplatte 10, die im Betätigungsmodul 5 angeordnet ist.

Das Zierelement 4 bildet das Betätigungselement 7 des Betätigungsmoduls 5. Dabei ist das Zierelement 4 eingerichtet, bei dessen Betätigen sich elastisch zu verformen. Insbesondere ist das Zierelement 4 eingerichtet, sich elastisch reversibel zu verformen. Mit anderen Worten: Das Zierelement 4 geht von einem Ausgangszustand (nicht betätigter Zustand) ausgehend nach der Betätigung selbsttätig wieder in diesen Ausgangszustand zurück. Beispielsweise ist das Zierelement aus einem flexiblen, insbesondere elastischen, Material, insbesondere einem Schaumstoff, einem Silikon, einem thermoplastischen Elastomer und/oder einem thermoplastischen Polyurethan gebildet.

Im Vorbild ist der kapazitive Betätigungssensor 8 als ein sogenanntes MOC-Modul (= metall-over-cap-Modul) ausgebildet. Das Betätigungsmodul 5, insbesondere der Betätigungssensor 8, ist zumindest teilweise in das Zierelement 4 integriert.

Das Zierelement 4 ist an einer Fahrzeugaußenhaut 11 des beweglichen Fahrzeugelements, insbesondere einer Tür 2 oder der Heckklappe 3, angeordnet. In diesem Vorbild ist das Zierelement 4 mit dem teilweise integrierten Betätigungsmodul 5 auf einer der Seiten des beweglichen Fahrzeugelements, insbesondere auf der Fahrzeugaußenhaut 11, angeordnet und befestigt. Insbesondere sind das als Betätigungselement 7 ausgebildete Zierelement 4 und der Betätigungssensor 8 auf einer der Seiten des beweglichen Fahrzeugelements angeordnet und befestigt.

Beispielsweise umfasst das Zierelement 4 einen Hauptkörper 41. Von dem Hauptkörper 41 ragen Befestigungselemente 42 in Richtung der Fahrzeugaußenhaut 11 ab. Die Befestigungselemente 42 sind beispielsweise Fußelemente mit Innengewinde, in welche Schrauben eingeführt werden können.

Das Zierelement 4, insbesondere das jeweilige Befestigungselement 42, ist beweglich, insbesondere elastisch beweglich oder federnd, an der Fahrzeugaußenhaut 11 gelagert. Hierzu ist das Zierelement 4 aus einem elastischen Material gebildet.

Alternativ oder zusätzlich sind beispielsweise flexible Elemente 43 in den Befestigungselementen 42 angeordnet. Das jeweilige flexible Element 43 ist flächig oder als eine dünne Schicht ausgebildet. Das jeweilige flexible Element 43 weist zum Beispiel ein flexibles, insbesondere elastisches, Material, insbesondere einen Schaumstoff, ein Silikon, ein thermoplastisches Elastomer und/oder ein thermoplastisches Polyurethan auf. Alle Befestigungselemente 42 weisen in Form, Größe, Abmessung und/oder Material gleiche flexible Elemente 43 auf.

Der Betätigungssensor 8 ist in diesem Vorbild teilweise in dem Zierelement 4 als Betätigungselement 7 integriert und teilweise zwischen dem Zierelement 4 und der Fahrzeugaußenhaut 11 angeordnet.

Der Betätigungssensor 8 umfasst zumindest ein erstes Sensorelement 81 und ein zweites Sensorelement 82, welche zueinander beabstandet und einander gegenüberliegend angeordnet sind. Das jeweilige Sensorelement 81 und 82 umfasst ein zugehöriges Sensorgehäuseteil 83 beziehungsweise 84. Die beiden Sensorelemente 81und 82 sind mittels der beiden Sensorgehäuseteile 83 und 84 relativ zueinander beweglich gelagert. Dazu ist zwischen den beiden Sensorgehäuseteilen 83 und 84 ein weiteres flexibles Element 85 angeordnet.

Das weitere flexible Element 85 weist zum Beispiel ein flexibles, insbesondere elastisches, Material, insbesondere einen Schaumstoff, ein Silikon, ein thermoplastisches Elastomer und/oder ein thermoplastisches Polyurethan auf. Alle weiteren flexiblen Elemente 85 zwischen den beiden Sensorgehäuseteilen 83 und 84 weisen die gleiche Form, Größe, Abmessung und/oder das gleiche Material auf.

Zusätzlich können die flexiblen Elemente 43 des Zierelements 4 und die weiteren flexiblen Elemente 85 des Betätigungssensors 8 die gleiche Form, Größe, Abmessung und/oder das gleiche Material aufweisen.

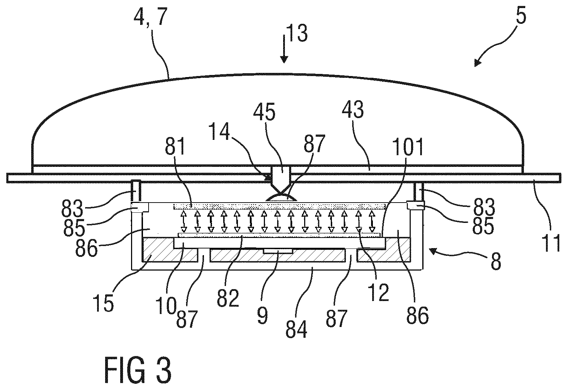

Das erste Sensorelement 81 ist teilweise in dem Zierelement 4 integriert. Beispielsweise ist das zugehörige Sensorgehäuseteil 83 in einer Aussparung 44 des Zierelements 4 angeordnet. Die Aussparung 44 ist in Richtung der Fahrzeugaußenhaut 11 offen ausgebildet. Das Zierelement 4 ist aus einem festen Material, insbesondere aus einem festen Kunststoffmaterial, welches lackiert oder verchromt sein kann, gebildet. Die Sensorelemente 81, 82 sind insbesondere nach außen, zum Beispiel mittels des Sensorgehäuseteils 83 und des Zierelements 4 (gezeigt in Figur 2), oder innen, zum Beispiel mittels des Sensorgehäuseteils 84 (gezeigt in Figur 3), insbesondere weg von der Fahrzeugaußenhaut 11 gekapselt. Beispielsweise sind die Sensorelemente 81, 82 mittels des Zierelements 4 nach außen gekapselt, insbesondere umschäumt, umgossen und/oder überlackiert.

Zusätzlich kann das erste Sensorelement 81 an einer in Richtung des zweiten Sensorelements 82 weisenden Oberflächenseite 101 der Leiterplatte 10 angeordnet sein.

Das zweite Sensorelement 82 ist mit seinem Sensorgehäuseteil 84 an der Fahrzeugaußenhaut 11 angeordnet. Das zweite Sensorelement 82 ist über die weiteren flexiblen Elemente 85 mit dem ersten Sensorelement 81 verbunden und kann als ein Modul in das Zierelement 4 integriert, insbesondere in der Aussparung 44 angeordnet und befestigt werden.

Alternativ kann das zweite Sensorelement 82 an der Oberflächenseite 101 der Leiterplatte 10 angeordnet und damit in das Zierelement 4 integriert sein und das erste Sensorelement 81 an der Fahrzeugaußenhaut 11 angeordnet sein. Eines der beiden Sensorelemente 81 oder 82 ist ein bewegliches Sensorelement 81 beziehungsweise 82 und das andere der beiden Sensorelemente 82 oder 81 ist ein festes, insbesondere ein feststehendes Sensorelement 82 beziehungsweise 81.

Der zwischen den Sensorgehäuseteilen 83 und 84 gebildete Innenraum 86 kann hohl oder mittels eines, insbesondere elastischen, Schaummaterials ausgeschäumt sein. Zusätzlich können auf der Innenseite des jeweiligen Sensorgehäuseteiles 83 und/oder 84 Anschläge 87 vorgesehen sein.

Sowohl das Zierelement 4 als auch das in dieses integrierte erste Sensorelement 81 sind eingerichtet, mittels des Zierelements 4 selbst und/oder mittels der flexiblen Elemente 43 und/oder der weiteren flexiblen Elemente 85 einen Betätigungshub 12, von insbesondere einigen Zehntelmillimeter, bereitzustellen.

Zwischen den beiden Sensorelementen 81 und 82 wird ein elektrisches Feld aufgespannt, das der Auswertung des Betätigungshubes 12 dient. Je nach Ausbildung des Betätigungssensors 8 kann das erste Sensorelement 81 mit der Leiterplatte 10 eine Messelektrode bilden und das zweite Sensorelement 82 eine Gegenelektrode bilden oder umgekehrt.

Der Betätigungssensor 8 ist mittels der Sensorgehäuseteile 83 und 84 gekapselt und vor äußeren Umwelteinflüssen, wie Feuchtigkeit, Regen und/oder Schmutzwasser, geschützt. Das weitere flexible Element 85 zwischen den Sensorgehäuseteilen 83 und 84 kann gleichzeitig eine Verbindungsfunktion, Rückstellfunktion und Abdichtungsfunktion ausüben.

Zudem kann das Zierelement 4 den innen liegenden Betätigungssensor 8 überdecken und mittels der Befestigungselemente 42 nach außen hin kapseln.

Das Zierelement 4 selbst, die flexiblen Elemente 43 des Zierelements 4 und/oder die weiteren flexiblen Elemente 85 des Betätigungssensors 8 dienen darüber hinaus einer Rückstellfunktion derart, dass diese nach Beendigung einer Betätigungsbewegung des Zierelements 4 als Betätigungselement 7 in eine Betätigungsstellung das Zierelement 4 selbsttätig in eine Ausgangsstellung oder Ruhestellung zurückstellen.

Das Zierelement 4 kann mit dem montierten Betätigungssensor 8 als ein vormontiertes Montagemodul oder eine separate integrierte Baueinheit ausgebildet sein. Mit anderen Worten: Das Zierelement 4 wird zusammen mit dem vormontierten Betätigungssensor 8 an der Fahrzeugaußenhaut 11 montiert.

Anstelle eines kapazitiven Sensors kann auch ein induktiver Sensor zum Ausführen einer Schaltfunktion vorgesehen sein.

Der Betätigungssensor 8 wird durch Kraft beaufschlagt, zum Beispiel durch eine Druckkraft an der Außenseite des Zierelements 4 gemäß Pfeil 13. Übersteigt ein aus der Kraft resultierender Betätigungshub 12 einen vorgegebenen Schwellwert von wenigen Zehntelmillimeter, wird dies als ein Öffnungswunsch identifiziert und das Türschloss sicher entriegelt. Die Auslösung der Entriegelung erfolgt zum Beispiel durch Drücken auf das Zierelement 4 auf dessen Außenseite in Richtung der Fahrzeugaußenhaut 11, so dass das Zierelement 4 als Betätigungselement 7 in Richtung Fahrzeugaußenhaut 11 bewegt oder gedrückt wird. Bei einem hinreichend großen Betätigungshub 12 des Zierelements 4 nimmt dieses das bewegliche, erste Sensorelement 81, insbesondere ein Federblech, eine Metallschicht, insbesondere eine Kupferschicht auf der Leiterplatte 10, mit und drückt dieses ebenfalls in Richtung der Fahrzeugaußenhaut 11, wodurch der Abstand zum zweiten Sensorelement 82, insbesondere einer Metallschicht, zum Beispiel einer Kupferschicht auf der Innenseite des Sensorgehäuseteils 84, und damit das dazwischen liegende elektrische Feld verändert wird und bei Überschreiten des vorgegebenen Schwellwertes ein Öffnungssignal erzeugt wird und beispielsweise das Türschloss entriegelt oder eine Türbewegung gestoppt wird.

Diese Veränderung des elektrischen Feldes wird mittels der elektronischen Auswerteeinheit 9 erfasst. Die elektronische Auswerteeinheit 9 erzeugt bei Überschreiten des vorgegebenen Schwellwertes ein entsprechendes Steuersignal zum Öffnen oder Entriegeln des elektronischen Schließsystems der Tür 2 oder der Heckklappe 3.

Das Zierelement 4 überdeckt den Betätigungssensor 8 vollständig. Das Zierelement 4 und der Betätigungssensor 8 sind derart ausgebildet und zueinander eingerichtet, dass das Zierelement 4 an jeder beliebigen Stelle betätigt werden kann. Mit anderen Worten: Der Betätigungssensor 8 erkennt positionsunabhängig jede Betätigung des Zierelements 4. In Abhängigkeit vom erfassten Betätigungshub 12 wird dann mittels der elektronischen Auswerteeinheit 9 ein entsprechendes Öffnungssignal erzeugt. Dabei ist das Zierelement 4 als Betätigungselement 7 derart eingerichtet und angeordnet, dass es nur in eine Richtung, insbesondere linear, zum Beispiel in Betätigungsrichtung gemäß Pfeil 13, beweglich angeordnet ist.

Bei einem Zusammenbau des Betätigungsmoduls 5 können, insbesondere in Abhängigkeit von Einzelteiltoleranzen, unterschiedliche Abstände zwischen dem ersten Sensorelement 81 und dem zweiten Sensorelement 82 entstehen. Dieser sich möglicherweise ergebende Abstand kann "genullt", also weitestgehend eliminiert werden, indem ausgehend von diesem sich ergebenden Abstand der Betätigungsweg gemessen wird.

**Figur 3** zeigt eine schematische Darstellung eines erfindungsgemäßen Ausführungsbeispiels eines Zierelements 4 in Kombination mit einem Betätigungsmodul 5. Dieses Ausführungsbeispiel unterscheidet sich vom Vorbild darin, dass der Betätigungssensor 8 nicht in das Zierelement 4 integriert ist und nicht außen auf der Fahrzeugaußenhaut 11 angeordnet ist. In diesem Ausführungsbeispiel ist der Betätigungssensor 8 auf einer Innenseite der Fahrzeugaußenhaut 11 angeordnet. Das Zierelement 4 als Betätigungselement 7 des Betätigungsmoduls 5 ist auf der Außenseite der Fahrzeugaußenhaut 11 angeordnet und mittels des flexiblen Elements 43 beweglich, insbesondere linear beweglich, zur Fahrzeugaußenhaut 11 gelagert. Somit sind das Zierelement 4 als Betätigungselement 7 und der Betätigungssensor 8 getrennt voneinander auf gegenüberliegenden Seiten des beweglichen Fahrzeugelements, insbesondere der Fahrzeugaußenhaut 11, angeordnet.

Das flexible Element 43 ist flächig ausgebildet. Beispielsweise ist das flexible Element 43 als eine elastische Schicht aus einem elastischen Material, insbesondere aus einem Schaumstoff, einem Silikon, einem thermoplastischen Elastomer und/oder einem thermoplastischen Polyurethan, gebildet.

Das Zierelement 4 weist anstelle der Aussparung 44 gemäß **Figur 2** einen in Richtung Fahrzeugaußenhaut 11 abstehenden Stößel 45 auf. Der Stößel 45 erstreckt sich durch eine Öffnung 14 in der Fahrzeugaußenhaut 11 und liegt in einer Ruhestellung oder Ausgangsstellung des Zierelements 4 an einem Anschlag 87 des ersten Sensorelements 81 an. Der Anschlag 87 kann als eine Auswölbung oder eine Vertiefung ausgebildet sein. In diesem Ausführungsbeispiel nimmt das untere Sensorgehäuseteil 84 die Leiterplatte 10 mit den Anschlägen 87 auf. Das obere Sensorgehäuseteil 83 ist sehr schmal ausgebildet und weist auf seiner hin zum zweiten Sensorgehäuseteil 84 weisenden Seite als erstes Sensorelement 81 eine Metallfläche, insbesondere eine Kupferschicht oder Metallschicht, auf.

Durch Drücken auf das Zierelement 4 in Richtung der Fahrzeugaußenhaut 11 gemäß Pfeil 13 wird das Zierelement 4 als Betätigungselement 7 und damit dessen Stößel 45 in Richtung Fahrzeugaußenhaut 11 und Betätigungssensor 8 bewegt oder gedrückt. Bei einem hinreichend großen Betätigungshub 12 des Zierelements 4 drückt dieses über seinen Stößel 45 das erste Sensorelement 81, insbesondere ein Federblech oder ein Metallblech, in Richtung des zweiten Sensorelements 82, wodurch der Abstand zum zweiten Sensorelement 82, insbesondere zu einer Metallschicht, zum Beispiel zu einer Kupferschicht auf der Leiterplatte 10, und damit das dazwischen liegende elektrische Feld verändert werden und bei Überschreiten des vorgegebenen Schwellwertes ein Öffnungssignal erzeugt wird und beispielsweise das Türschloss entriegelt oder eine Türbewegung gestoppt wird.

Das Zierelement 4 mit dem Stößel 45 und der Betätigungssensor 8 mit dem Anschlag 87 sind derart zueinander angeordnet und eingerichtet, dass das Zierelement 4, insbesondere ein Emblem, überall gedrückt werden kann, um den Abstand zwischen den beiden Sensorelementen 81 und 82 zu verändern. Anstatt einer Ausbeulung oder Auswölbung als Anschlag 87 kann auch eine Vertiefung vorgesehen sein. Für beide Ausführungsbeispiele gilt, dass zumindest eines der beiden oder beide Sensorelemente 81 und 82 vorgespannt sein kann oder können.

Gemäß dem in **Figur 3** gezeigten Ausführungsbeispiel ist die Leiterplatte 10 zumindest abschnittsweise mit einem geeigneten Material 15, beispielsweise einem Schaum und/oder einer Vergussmasse, umgossen, so dass eine Elektronik des Betätigungsmoduls 5 vor äußeren Einflüssen, wie beispielsweise Wasser, geschützt angeordnet ist.

### BEZUGSZEICHENLISTE

- 1: Fahrzeug Tür
- 2 3: Heckklappe
- 4: Zierelement
- 41: Hauptkörper
- 42: Befestigungselement
- 43: flexibles Element
- 44: Aussparung
- 45: Stößel
- 5: Betätigungsmodul
- 6: Griff
- 7: Betätigungselement
- 8: Betätigungssensor
- 81: erstes Sensorelement
- 82: zweites Sensorelement
- 83: Sensorgehäuseteil
- 84: Sensorgehäuseteil
- 85: weiteres flexibles Element
- 86: Innenraum
- 87: Anschlag
- 9: elektronische Auswerteeinheit
- 10: Leiterplatte
- 101: Oberflächenseite
- 11: Fahrzeugaußenhaut
- 12: Betätigungshub
- 13: Pfeil
- 14: Öffnung
- 15: Material

## Patentansprüche

1. Zierelement (4) mit einem Betätigungsmodul (5) für ein elektronisches Schließsystem, wobei das Betätigungsmodul (5) zumindest ein äußeres Betätigungselement (7) und einen innenliegenden Betätigungssensor (8) zum Ausführen einer Schaltfunktion und eine elektronische Auswerteeinheit (9) umfasst, welche mit dem Betätigungssensor (8) verbunden ist,
wobei der Betätigungssensor (8) ein erstes innenliegendes Sensorelement (81) und ein zweites innenliegendes Sensorelement (82) umfasst, die zueinander beabstandet und einander gegenüberliegend angeordnet sind und zwischen denen sich ein elektrisches Feld aufspannt,
wobei das Zierelement (4) das Betätigungselement (7) bildet und sich das Zierelement (4) beim Betätigen, insbesondere in seine Betätigungsstellung, elastisch verformt, so dass der innenliegende Betätigungssensor (8) mit Kraft beaufschlagt wird und sich der Abstand zwischen den beiden Sensorelementen (81, 82) und sich das zwischen den beiden Sensorelementen (81, 82) aufgespannte elektrische Feld ändert,
wobei die elektronische Auswerteeinheit (9) die Veränderung des elektrischen Feldes erfasst und bei Überschreiten eines Schwellwertes ein entsprechendes Steuersignal zum Öffnen oder Entriegeln des elektronischen Schließsystems erzeugt,
**dadurch gekennzeichnet, dass**
zumindest zwischen dem Zierelement (4) und zumindest einer Komponente des Betätigungssensors (8) ein flexibles Element (43) angeordnet ist, welches sich beim Betätigen des Zierelements (4), insbesondere in seine Betätigungsstellung, verformt,
wobei das jeweilige Sensorelement (81, 82) ein zugehöriges Sensorgehäuseteil (83, 84) umfasst und die beiden Sensorelemente (81, 82) mittels der Sensorgehäuseteile (83, 84) relativ zueinander beweglich gelagert sind und
wobei zwischen den beiden Sensorgehäuseteilen (83, 84) ein weiteres flexibles Element (85) angeordnet ist.

2. Zierelement (4) nach Anspruch 1, wobei das als Betätigungselement (7) ausgebildete Zierelement (4) selbst als ein verformbares Element ausgebildet ist, welches sich beim Betätigen des Zierelements (4), insbesondere in seine Betätigungsstellung, reversibel verformt.

3. Zierelement (4) nach Anspruch 1 oder 2, wobei das äußere Betätigungselement (7) mit dem Betätigungssensor (8) wirkverbunden ist, um die elastische Verformung des äußeren Betätigungselements (7) in einen Betätigungshub (12) des Betätigungssensors (8) zu übertragen.

4. Zierelement (4) nach Anspruch 3,
wobei der Betätigungssensor (8) eingerichtet ist, in Folge des ausgeübten Betätigungshubes (12) bei Erreichen oder Überschreiten eines vorgegebenen Mindestbetätigungshubes ein Auslösesignal oder Schaltsignal zu genieren.

5. Zierelement (4) nach einem der vorhergehenden Ansprüche,
**dadurch gekennzeichnet, dass** das flexible Element (43) zwischen dem Betätigungselement (7) und dem Betätigungssensor (8) angeordnet ist.

6. Zierelement (4) nach einem der vorhergehenden Ansprüche, wobei das flexible Element (43) in einem Befestigungselement (42) oder zwischen dem Betätigungselement (7) und dem Befestigungselement (42) angeordnet ist.

7. Zierelement (4) nach einem der vorhergehenden Ansprüche,
**dadurch gekennzeichnet, dass** der Betätigungssensor (8) als kraftgesteuerter kapazitiver Betätigungssensor (8) ausgebildet ist.

8. Zierelement (4) nach einem der vorhergehenden Ansprüche,
**dadurch gekennzeichnet, dass** die Sensorelemente (81, 82) nach außen gekapselt sind.

9. Zierelement (4) nach Anspruch 8,
**dadurch gekennzeichnet, dass** die Sensorelemente (81, 82) mittels des Zierelements (4) nach außen gekapselt sind.

10. Bewegliches Fahrzeugelement mit einem Zierelement (4) nach einem der Ansprüche 1 bis 9,
wobei das Betätigungselement (7) und der Betätigungssensor (8) gemeinsam auf einer Seite des beweglichen Fahrzeugelements oder getrennt auf gegenüberliegenden Seiten des beweglichen Fahrzeugelements, insbesondere einer Fahrzeugaußenhaut (11) des Fahrzeugelements, angeordnet sind.

11. Fahrzeug (1) mit mindestens einem beweglichen Fahrzeugelement nach Anspruch 10.

## Claims

1. Decorative element (4) having an actuating module (5) for an electronic locking system, wherein the actuating module (5) comprises at least an outer actuating element (7) and an internal actuating sensor (8) for executing a switching function and an electronic evaluation unit (9) which is connected to the actuating sensor (8),
wherein the actuating sensor (8) comprises a first internal sensor element (81) and a second internal sensor element (82) which are spaced apart from each other and arranged opposite each other and between which an electric field is established,
wherein the decorative element (4) forms the actuating element (7) and the decorative element (4) is elastically deformed when actuated, in particular to its actuating position, so that force is applied to the internal actuating sensor (8) and the distance between the two sensor elements (81, 82) and the electric field established between the two sensor elements (81, 82) change,
wherein the electronic evaluation unit (9) detects the change in the electric field and, if a threshold value is exceeded, generates a corresponding control signal for opening or unlocking the electronic locking system,
**characterized in that** a flexible element (43) is arranged at least between the decorative element (4) and at least one component of the actuating sensor (8) and deforms when the decorative element (4) is actuated, in particular to its actuating position,
wherein the respective sensor element (81, 82) comprises an associated sensor housing part (83, 84) and the two sensor elements (81, 82) are movably mounted relative to each other by means of the sensor housing parts (83, 84) and
wherein a further flexible element (85) is arranged between the two sensor housing parts (83, 84).

2. Decorative element (4) according to Claim 1, wherein the decorative element (4) in the form of an actuating element (7) is itself in the form of a deformable element which is reversibly deformed when the decorative element (4) is actuated, in particular to its actuating position.

3. Decorative element (4) according to Claim 1 or 2, wherein the outer actuating element (7) is operatively connected to the actuating sensor (8) in order to transfer the elastic deformation of the outer actuating element (7) into an actuating stroke (12) of the actuating sensor (8).

4. Decorative element (4) according to Claim 3,
wherein the actuating sensor (8) is designed to generate a tripping signal or switching signal as a result of the exerted actuating stroke (12) when a specified minimum actuating stroke is reached or exceeded.

5. Decorative element (4) according to any of the preceding claims,
**characterized in that** the flexible element (43) is arranged between the actuating element (7) and the actuating sensor (8).

6. Decorative element (4) according to any of the preceding claims, wherein the flexible element (43) is arranged in a fastening element (42) or between the actuating element (7) and the fastening element (42).

7. Decorative element (4) according to any of the preceding claims,
**characterized in that** the actuating sensor (8) is in the form of a force-controlled capacitive actuating sensor (8).

8. Decorative element (4) according to any of the preceding claims,
**characterized in that** the sensor elements (81, 82) are encapsulated to the outside.

9. Decorative element (4) according to Claim 8,
**characterized in that** the sensor elements (81, 82) are encapsulated to the outside by means of the decorative element (4).

10. Movable vehicle element having a decorative element (4) according to any of Claims 1 to 9,
wherein the actuating element (7) and the actuating sensor (8) are arranged together on one side of the movable vehicle element or separately on opposite sides of the movable vehicle element, in particular a vehicle outer skin (11) of the vehicle element.

11. Vehicle (1) having at least one movable vehicle element according to Claim 10.

## Revendications

1. Élément décoratif (4) comprenant un module d'actionnement (5) pour un système de fermeture électronique, le module d'actionnement (5) comprenant au moins un élément d'actionnement extérieur (7) et un capteur d'actionnement intérieur (8) destiné à exécuter une fonction de commutation, ainsi qu'une unité d'évaluation électronique (9) qui est reliée au capteur d'actionnement (8).
le capteur d'actionnement (8) comprenant un premier élément capteur intérieur (81) et un deuxième élément capteur intérieur (82), qui sont disposés à distance l'un de l'autre et en vis-à-vis l'un de l'autre et entre lesquels s'établit un champ électrique,
l'élément décoratif (4) formant l'élément d'actionnement (7) et l'élément décoratif (4) se déformant élastiquement lors de l'actionnement, en particulier dans sa position d'actionnement, de sorte qu'une force est exercée sur le capteur d'actionnement intérieur (8) et la distance entre les deux éléments capteurs (81, 82) ainsi que le champ électrique qui est établi entre les deux éléments capteurs (81, 82) varie,
l'unité d'évaluation électronique (9) détectant la variation du champ électrique et, en cas de dépassement d'une valeur de seuil, générant un signal de commande correspondant destiné à l'ouverture ou au déverrouillage du système de fermeture électronique,
**caractérisé en ce qu'**au moins entre l'élément décoratif (4) et au moins un composant du capteur d'actionnement (8) est disposé un élément flexible (43), lequel se déforme lors de l'actionnement de l'élément décoratif (4), en particulier dans sa position d'actionnement,
l'élément capteur (81, 82) respectif comprend une partie de boîtier de capteur (83, 84) associée et les deux éléments capteurs (81, 82) étant montés mobiles l'un par rapport à l'autre au moyen des parties de boîtier de capteur (83, 84) et
un élément flexible supplémentaire (85) étant disposé entre les deux parties de boîtier de capteur (83, 84).

2. Élément décoratif (4) selon la revendication 1, l'élément décoratif (4) réalisé sous la forme d'un élément d'actionnement (7) étant lui-même réalisé sous la forme d'un élément déformable qui, lors de l'actionnement de l'élément décoratif (4), en particulier dans sa position d'actionnement, se déforme de manière réversible.

3. Élément décoratif (4) selon la revendication 1 ou 2, l'élément d'actionnement extérieur (7) étant en liaison fonctionnelle avec le capteur d'actionnement (8) afin de transférer la déformation élastique de l'élément d'actionnement extérieur (7) en une course d'actionnement (12) du capteur d'actionnement (8).

4. Élément décoratif (4) selon la revendication 3,
le capteur d'actionnement (8) étant conçu pour générer un signal de déclenchement ou un signal de commutation suite à la course d'actionnement (12) exercée lorsqu'une course d'actionnement minimale prédéfinie est atteinte ou dépassée.

5. Élément décoratif (4) selon l'une des revendications précédentes,
**caractérisé en ce que** l'élément flexible (43) est disposé entre l'élément d'actionnement (7) et le capteur d'actionnement (8).

6. Élément décoratif (4) selon l'une des revendications précédentes, l'élément flexible (43) étant disposé dans un élément de fixation (42) ou entre l'élément d'actionnement (7) et l'élément de fixation (42).

7. Élément décoratif (4) selon l'une des revendications précédentes,
**caractérisé en ce que** le capteur d'actionnement (8) est réalisé sous la forme d'un capteur d'actionnement capacitif (8) commandé par la force.

8. Élément décoratif (4) selon l'une des revendications précédentes,
**caractérisé en ce que** les éléments capteurs (81, 82) sont encapsulés vers l'extérieur.

9. Élément décoratif (4) selon la revendication 8,
**caractérisé en ce que** les éléments capteurs (81, 82) sont encapsulés vers l'extérieur au moyen de l'élément décoratif (4).

10. Élément mobile de véhicule comprenant un élément décoratif (4) selon l'une des revendications 1 à 9, l'élément d'actionnement (7) et le capteur
d'actionnement (8) étant disposés conjointement sur un côté de l'élément mobile de véhicule ou séparément sur des côtés opposés de l'élément mobile de véhicule, en particulier une enveloppe extérieure de véhicule (11) de l'élément mobile de véhicule.

11. Véhicule (1) comprenant au moins un élément mobile de véhicule selon la revendication 10.
